# EUROPÄISCHE PATENTSCHRIFT

(11) **EP 4 010 137 B1**
(45) Veröffentlichungstag und Bekanntmachung des Hinweises auf die Patenterteilung: **20.03.2024**
(21) Anmeldenummer: 20753736.6
(22) Anmeldetag: 06.08.2020
(51) Int. Cl.: B23B 27/04

(54) **SCHNEIDPLATTE UND WERKZEUG MIT EINER SOLCHEN SCHNEIDPLATTE**
CUTTING INSERT AND TOOL HAVING SUCH A CUTTING INSERT
INSERT DE COUPE ET OUTIL COMPORTANT UN TEL INSERT DE COUPE

(30) Priorität: 08.08.2019 DE 102019121468
(43) Veröffentlichungstag der Anmeldung: 15.06.2022
(73) Patentinhaber: Hartmetall-Werkzeugfabrik Paul Horn GmbH, 72072 Tübingen (DE)
(72) Erfinder: STEINHILBER, Marc, 72116 Moessingen (DE); SCHAEFER, Hans, 72810 Gomaringen (DE)
(74) Vertreter: Witte, Weller & Partner Patentanwälte mbB
(86) Internationale Anmeldenummer: PCT/EP2020/072175
(87) Internationale Veröffentlichungsnummer: WO 2021/023835

(56) Entgegenhaltungen:
- EP-A1- 1 184 110
- EP-A2- 0 245 225
- DE-A1- 4 433 389
- DE-A1- 10 006 303

## Beschreibung

Die vorliegende Erfindung betrifft eine Schneidplatte für ein Werkzeug zur spanenden Bearbeitung. Die vorliegende Erfindung betrifft darüber hinaus auch ein Werkzeug mit einer solchen Schneidplatte und einem Werkzeughalter, der zumindest eine Schneidplattenaufnahme zur Aufnahme der Schneidplatte aufweist.

Bei der erfindungsgemäßen Schneidplatte handelt es sich vorzugsweise um eine Schneidplatte, die für die Drehbearbeitung verwendbar ist. Besonders bevorzugt ist die erfindungsgemäße Schneidplatte für Stechdreh-Bearbeitungen geeignet.

Eine aus dem Stand der Technik bekannte Schneidplatte gemäß dem Oberbegriff des Anspruchs 1, die ebenfalls insbesondere für das Stechdrehen entwickelt wurde, ist aus der DE 100 42 692 A1 bekannt. Wenngleich sich diese Schneidplatte in der Praxis als durchaus vorteilhaft herausgestellt hat, haben sich mit der Zeit dennoch mehrere Nachteile gezeigt, die Raum für Verbesserungspotential bieten.

Weitere beispielhafte Schneidplatten sind aus den folgenden Druckschriften bekannt:
DE 100 06 303 A1, DE 44 33 389 A1 und EP 1 184 110 A1.

Die aus der DE 100 42 692 A1 bekannte Schneidplatte eignet sich aufgrund der Spanformgeometrie, also aufgrund der Form der Spanfläche im Schneidenbereich der Schneidplatte, lediglich für sogenannte Vollschnitte, bei denen über die gesamte Breite der Hauptschneidkante der Schneidplatte in das Werkstück eingestochen wird.

Für sogenannte Teilschnitte, bei denen das Werkstück lediglich mit einem Teilabschnitt der Hauptschneidkante bearbeitet wird, ist die aus der DE 100 42 692 A1 bekannte Schneidplatte hingegen weniger gut geeignet. Teilschnitte lassen sich mit dieser Schneidplatte zwar grundsätzlich herstellen, die dabei entstehende Spanbildung ist jedoch weniger vorteilhaft als bei einem Vollschnitt, bei dem über die gesamte Breite bzw. Länge der Hauptschneidkante in das Werkstück eingestochen wird. Der Grund hierfür ist insbesondere in der speziellen Art der Ausgestaltung der Geometrie des Schneidenbereichs zu sehen.

Als Schneidenbereich wird hierbei nicht nur der Bereich der Schneidkanten selbst, sondern der gesamte Bereich der Schneidplatte angesehen, der während der Bearbeitung des Werkstücks die Spanbildung mitbeeinflusst. Zu dem Schneidenbereich gehören neben der Hauptschneidkante also auch die Spanfläche sowie die Nebenschneidkanten.

Bei der aus der DE 100 42 692 A1 bekannten Schneidplatte hat es sich beispielsweise gezeigt, dass bei der Bearbeitung von Teilschnitten der Spanbruch nicht wie gewünscht erfolgt. Es bilden sich vergleichsweise lange Späne. Dies beeinträchtigt die Prozesssicherheit, da das Werkstück und/oder das Werkzeug durch die relativ langen Späne beschädigt werden können.

Es ist daher eine Aufgabe der vorliegenden Erfindung, eine Schneidplatte bereitzustellen, deren Einsatzvariabilität derart vergrößert ist, dass sie nicht nur für das Einstechdrehen bei Vollschnitten, sondern auch für das Einstechdrehen bei Teilschnitten gut geeignet ist. Insbesondere sollen die Spanbildungseigenschaften der Schneidplatte verbessert werden, und zwar unabhängig davon, ob die gesamte Hauptschneidkante mit dem Werkstück in Kontakt kommt (Vollschnitt) oder nur ein Teilabschnitt der Hauptschneidkante mit dem Werkstück in Kontakt kommt (Teilschnitt).

Gelöst wird diese Aufgabe durch eine Schneidplatte gemäß Anspruch 1, welche folgende Merkmale aufweist:
- eine Hauptschneidkante, die geradlinig ausgestaltet ist und orthogonal zu einer Längsrichtung des Schneidenbereichs verläuft;
- eine Fase, die in drei Teilbereiche aufgeteilt ist, welche alle in einer gemeinsamen Fasenebene angeordnet sind, wobei ein erster der drei Teilbereiche angrenzend an ein erstes Ende der Hauptschneidkante angeordnet ist, ein zweiter der drei Teilbereiche sich entlang zumindest eines Großteils der Hauptschneidkante und parallel zu dieser erstreckt und ein dritter der drei Teilbereiche angrenzend an ein zweites Ende der Hauptschneidkante angeordnet ist;
- eine Spanmulde, die als Vertiefung ausgestaltet ist, welche seitlich durch den ersten und den dritten Teilbereich der Fase begrenzt ist, in ihrem vorderen, auf die Hauptschneidkante zuweisenden Endbereich durch den zweiten Teilbereich der Fase begrenzt ist und in ihrem gegenüberliegenden, hinteren Bereich durch eine Wandung begrenzt ist;

wobei die Spanmulde inklusive der Wandung spiegelsymmetrisch zu einer Symmetrieebene ist, die orthogonal zu der Hauptschneidkante ausgerichtet ist und durch einen Mittelpunkt der Hauptschneidkante verläuft,
wobei die Spanmulde inklusive der Wandung unterhalb der Fasenebene angeordnet ist und diese nicht schneidet,
wobei die Wandung fünf Wandungsbereiche aufweist, die in aufsteigender Reihenfolge der Reihe nach aneinander angrenzen, wobei ein erster der fünf Wandungsbereiche und ein fünfter der fünf Wandungsbereiche bezüglich der Symmetrieebene spiegelbildlich zu einander ausgestaltet sind, wobei ein zweiter der fünf Wandungsbereiche und ein vierter der fünf Wandungsbereiche bezüglich der Symmetrieebene spiegelbildlich zu einander ausgestaltet sind, und wobei ein dritter der fünf Wandungsbereiche durch die Symmetrieebene in zwei spiegelbildliche Hälften aufgeteilt wird,
wobei eine Profillinie der Wandung, die sich durch einen Schnitt der Wandung mit einer imaginären Ebene ergibt, welche orthogonal zu der Symmetrieebene ausgerichtet ist und entlang der Längsrichtung verläuft, einen in dem ersten Wandungsbereich angeordneten ersten Teilabschnitt, einen in dem zweiten Wandungsbereich angeordneten zweiten Teilabschnitt, einen in dem dritten Wandungsbereich angeordneten dritten Teilabschnitt, einen in dem vierten Wandungsbereich angeordneten vierten Teilabschnitt und einen in dem fünften Wandungsbereich angeordneten fünften Teilabschnitt aufweist,
wobei der erste, der dritte und der fünfte Teilabschnitt jeweils konkav ausgestaltet sind, und wobei der zweite und der vierte Teilabschnitt jeweils geradlinig oder konvex ausgestaltet sind, und
wobei mindestens ein Punkt auf dem ersten Teilabschnitt einen geringeren Abstand von der Hauptschneidkante hat als alle Punkte auf dem zweiten, dem dritten und dem vierten Teilabschnitt, und wobei alle Punkte auf dem zweiten und dem vierten Teilabschnitt einen geringeren Abstand von der Hauptschneidkante haben als alle Punkte auf dem dritten Teilabschnitt.

Ein Merkmal der erfindungsgemäßen Schneidplatte ist die oben genannte Fase, die sich in drei Teilbereiche aufteilt und zumindest teilweise um die Spanmulde herum erstreckt. Die drei Teilbereiche der Fase sind allesamt in der gleichen Fasenebene angeordnet, die bezüglich der Längsrichtung des Schneidenbereichs schräg nach oben ausgerichtet ist.

Aufgrund dieser Ausrichtung schneidet die Fasenebene die Spanmulde nicht. Die Fasenebene liegt gesamthaft oberhalb der Spanmulde. Die Fase ist also unter einem negativen Spanwinkel gegenüber der xy-Ebene ausgerichtet. Man spricht deshalb auch von einer negativen Fase. Insbesondere die an die beiden Enden der Hauptschneidkante angrenzenden Teilbereiche der Fase (erster Teilbereich und dritter Teilbereich) ermöglichen eine Stabilisierung der Schneidenecken der Schneidplatte. Der zweite Teilbereich der Fase, welcher sich entlang eines Großteils der Länge der Länge der Hauptschneidkante erstreckt, trägt ebenso zu einer Stabilisierung der Hauptschneidkante bei. Die negative Fase stabilisiert daher die Hauptschneidkante über ihre gesamte Länge bzw. über die gesamte Breite der Schneidplatte.

Ein weiteres Merkmal der erfindungsgemäßen Schneidplatte ist die Spanmulde, welche an die beschriebene negative Fase angrenzt. Innerhalb dieser Spanmulde sind mehrere Spanflächen angeordnet, deren Geometrie für die Spanbildung entscheidend ist. In ihrem hinteren Bereich wird die Spanmulde durch eine Wandung begrenzt. Diese Wandung weist fünf Wandungsbereiche auf, die in aufsteigender Reihenfolge unmittelbar aneinander angrenzen. Unter "aufsteigender Reihenfolge" ist hierbei gemeint, dass der zweite Wandungsbereich an den ersten Wandungsbereich, der dritte Wandungsbereich an den zweiten Wandungsbereich, der vierte Wandungsbereich an den dritten Wandungsbereich und der fünfte Wandungsbereich an den vierten Wandungsbereich angrenzt.

Aufgrund der Spiegelsymmetrie der Spanmulde relativ zu der Symmetrieebene wird der mittlere, dritte Wandungsbereich durch die imaginäre Symmetrieebene in zwei gleichgro-ße, spiegelbildlich zueinander ausgestaltete Hälften aufgeteilt. Der erste Wandungsbereich ist spiegelbildlich zu dem fünften Wandungsbereich und der zweite Wandungsbereich ist spiegelbildlich zu dem vierten Wandungsbereich ausgestaltet. Alle fünf Wandungsbereiche sind vorzugsweise jeweils als Freiformflächen ausgestaltet.

Die Profillinie der Wandung, die sich durch einen Schnitt der Wandung mit einer imaginären Ebene ergibt, welche orthogonal zu der Symmetrieebene ausgerichtet ist und entlang der Längsrichtung verläuft, hat folgende Eigenschaften: Der erste, der dritte und der fünfte Teilabschnitt dieser Profillinie sind jeweils konkav ausgestaltet. Der zweite und der vierte Teilabschnitt der Profillinie sind jeweils geradlinig oder konvex ausgestaltet. Mindestens ein Punkt auf dem ersten Teilabschnitt der Profillinie hat einen geringeren Abstand von der Hauptschneidkante als alle Punkte auf dem zweiten, dem dritten und dem vierten Teilabschnitt der Profillinie. Aufgrund der Symmetrieeigenschaften der Spanmulde hat somit auch mindestens ein Punkt auf dem fünften Teilabschnitt der Profillinie einen geringeren Abstand von der Hauptschneidkante als alle Punkte auf dem zweiten, dem dritten und dem vierten Teilabschnitt der Profillinie. Des Weiteren haben alle Punkte auf dem zweiten und dem vierten Teilabschnitt der Profillinie einen geringeren Abstand von der Hauptschneidkante als alle Punkte auf dem dritten Teilabschnitt der Profillinie.

Anders bzw. vereinfacht ausgedrückt, hat also der mittig in der Spanmulde angeordnete, dritte Wandungsbereich den größten Abstand von der Hauptschneidkante. Die beiden seitlich daran angrenzenden, weiter außen liegenden, zweiten und vierten Wandungsbereiche der Spanmulde sind etwas näher an der Hauptschneidkante angeordnet als der dritte Wandungsbereich. Die beiden äußersten Wandungsbereiche (erster und fünfter Wandungsbereich) haben hingegen den kürzesten Abstand von der Hauptschneidkante. Wie oben bereits erwähnt, müssen diese Abstandsverhältnisse jedoch nicht zwangsläufig für die gesamten Wandungsbereich gelten, aber zumindest für jeweils einen Punkt auf diesen Wandungsbereichen.

Die beschriebene Form der Spanmulde, insbesondere die beschriebene Form der Wandung, führt gemeinsam mit der oben beschriebenen negativen Fase zu deutlich verbesserten Spanbildungseigenschaften während der Bearbeitung eines Werkstücks mit der erfindungsgemäßen Schneidplatte.

Versuche der Anmelderin haben gezeigt, dass sich sowohl bei einer Verwendung der Schneidplatte für einen Vollschnitt als auch bei einer Verwendung der Schneidplatte für einen Teilschnitt herausragende Spanbildungseigenschaften ergeben. Ein sogenanntes Stegstechen, bei dem ein auf dem Werkstück befindlicher Steg lediglich durch einen zentral angeordneten Teilabschnitt der Hauptschneidkante bearbeitet wird, ist mit der erfindungsgemäßen Schneidplatte ebenfalls möglich.

Das letztgenannte Stegstechen unterscheidet sich von dem zuvor erwähnten Teilschnitt-Stechen dadurch, dass der für die Bearbeitung des Werkstücks verwendete Teilabschnitt der Hauptschneidkante beim Stegstechen im zentralen Bereich der Hauptschneidkante, vorzugsweise symmetrisch zu der Symmetrieebene angeordnet ist, wohingegen der für die Bearbeitung des Werkstücks verwendete Teilabschnitt der Hauptschneidkante beim Teilschnitt-Stechen sich ausgehend von einem Ende der Hauptschneidkante bis zu einem beliebigen Punkt, der vorzugsweise zwischen der Mitte und dem anderen Ende der Hauptschneidkante liegt, erstreckt. Beim Teilschnitt-Stechen wird die Schneidplatte also typischerweise asymmetrisch zur Symmetrieebene der Spanmulde belastet.

Bei einem Vollschnitt, bei dem die gesamte Hauptschneidkante zur Bearbeitung des Werkstücks verwendet wird, tragen insbesondere der erste und der dritte Teilbereich der negativen Fase zu einer Stabilisierung der Schneidenecken bei. Dies ermöglicht hohe Standzeiten. Der mittlere Bereich der hinteren Wandung der Spanmulde, also der zweite, dritte und vierte Wandungsbereich, werden bei einem Vollschnitt nicht, oder zumindest nur minimal belastet. Der zweite, dritte und vierte Wandungsbereich der hinteren Wandung der Spanmulde beeinflussen die Bearbeitung während eines Vollschnitts daher gar nicht oder zumindest nur sehr geringfügig. Der erste und der dritte Teilbereich der negativen Fase trägt zusammen mit dem ersten und dem fünften Wandungsbereich der hinteren Wandung der Spanmulde bei einem Vollschnitt zu einer Spanverjüngung bei. Der von dem Werkstück abgehobene Span kann daher sehr gut aus der Bearbeitungsnut abfließen. Dies ermöglicht die Bildung von Spiralspänen mit kleinen Spanraumzahlen.

Bei einem Teilschnitt wird typischerweise einer der Teilbereiche der negativen Fase, die sich im Bereich der Ecken der Schneidplatte befinden (also entweder der erste Teilbereich oder der dritte Teilbereich der Fase), belastet. Zusätzlich zu diesem einen Teilbereich der negativen Fase wird bei einem Teilschnitt ein gegenüberliegender Wandungsbereich der hinteren Wandung der Spanmulde belastet. Je nachdem auf welcher Seite der Schneidplatte der Teilschnitt erfolgt, dienen als Funktionsflächen bei einem Teilschnitt beispielsweise der erste Teilbereich der negativen Fase zusammen mit dem vierten Wandungsbereich der Spanmulde oder auf der anderen Seite der zweite Teilbereich der negativen Fase zusammen mit dem vierten Wandungsbereich der Spanmulde. Die genannten Wandungsbereiche der Spanmulde wirken dabei jeweils den genannten Bereichen der negativen Fase als Ausgleich. Somit wird auch bei einem Teilschnitt die Bildung von langen, Spiralspänen minimiert. Somit lassen sich also auch bei einem Teilschnitt eine gute Spankontrolle und hohe Standzeiten erzielen.

Beim Stegstechen, bei dem ein zentral angeordneter Teilabschnitt der Hauptschneidkante zur Bearbeitung des Werkstücks eingesetzt wird, wird die Spanbildung im Wesentlichen durch den zentral angeordneten, dritten Wandungsbereich der hinteren Wandung der Spanmulde beeinflusst. Diese ist, wie bereits erwähnt, im Vergleich zu den übrigen Wandungsbereichen am weitesten entfernt von der Hauptschneidkante und konkav ausgestaltet. Somit lassen sich die abgehobenen Späne also auch bei dem Stegstechen seitlich aufrollen und dadurch verjüngen, was wiederum den Spanbruch begünstigt und lange Spiralspäne vermeidet. Der sich entlang des Großteils der Hauptschneidkante erstreckende zweite Teilbereich der negativen Fase trägt während des Stegstechens zusätzlich zur Stabilisierung der Hauptschneidkante bei und vermeidet so eine Beschädigung der Hauptschneidkante aufgrund Überbelastung.

Die erfindungsgemäße Ausgestaltung des Schneidenbereichs der Schneidplatte führt somit zu sehr guten Spanbildungseigenschaften, unabhängig davon, ob die Schneidplatte zur Bearbeitung eines Vollschnitts, eines Teilschnitts oder zum Stegstechen eingesetzt wird.

Die oben genannte Aufgabe ist daher vollständig gelöst.

Gemäß einer Ausgestaltung der vorliegenden Erfindung haben alle Punkte auf dem ersten Teilabschnitt der Profillinie einen geringeren Abstand von der Hauptschneidkante als alle Punkte auf dem zweiten, dem dritten und dem vierten Teilabschnitt der Profillinie.

Anders ausgedrückt, ist also der erste Wandungsbereich der hinteren Wandung der Spanmulde gesamthaft näher an der Hauptschneidkante angeordnet, der zweite, der dritte und der vierte Wandungsbereich der hinteren Wandung der Spanmulde. Aufgrund der Symmetrieeigenschaften der Spanmulde gilt dies entsprechend auch für den fünften Wandungsbereich. In der zuletzt genannten Ausgestaltung haben somit also auch alle Punkte auf dem fünften Teilabschnitt der Profillinie einen geringeren Abstand von der Hauptschneidkante als alle Punkte auf dem zweiten, dem dritten und dem vierten Teilabschnitt der Profillinie

In der zuletzt genannten Ausgestaltung haben also die ganz außen angeordneten Wandungsbereiche (erster und fünfter Wandungsbereich) den geringsten Abstand von der Hauptschneidkante und der zentral angeordnete Wandungsbereich (dritter Wandungsbereich) den größten Abstand von der Hauptschneidkante. Die Abstände der dazwischenliegenden Wandungsbereiche (zweiter und vierter Wandungsbereich) sind jeweils größer als der Abstand zwischen dem dritten Wandungsbereich und der Hauptschneidkante, jedoch kleiner als die Abstände der beiden äußeren Wandungsbereiche (erster und fünfter Wandungsbereich) von der Hauptschneidkante.

Gemäß einer weiteren Ausgestaltung definieren die fünf Teilabschnitte der Profillinie jeweils eine Kurve, die stetig und differenzierbar ist.

Die einzelnen Teilabschnitte der Profillinie sind also jeweils vorzugsweise knickfrei und ohne Unterbrechung. Ebenso sind die einzelnen Wandungsbereiche vorzugsweise knickfrei.

Vorzugsweise gehen die fünf Wandungsbereiche jedoch nicht tangential ineinander über. Zwischen den einzelnen Wandungsbereichen, also an dem Übergang von einem Wandungsbereich zum nächsten, können sich also Knicke oder Kanten ergeben. Die einzelnen Wandungsbereiche sind innerhalb der Spanmulde, also vorzugsweise deutlich voneinander segmentiert. Auch dies trägt zur Stabilität des Bearbeitungsprozesse bei und verbessert die Spanbildungseigenschaften, die sich bei einer Bearbeitung mit Hilfe der erfindungsgemäßen Schneidplatte ergeben.

Gemäß einer weiteren Ausgestaltung ist der dritte Teilabschnitt der Profillinie im Vergleich zu den übrigen Teilabschnitten der Profillinie der Längste.

Der mittig angeordnete, dritte Wandungsbereich bildet also vorzugsweise den größten Teil der hinteren Wandung der Spanmulde. Dies ist insbesondere von Vorteil bei einer Stegstech-Bearbeitung.

Gemäß einer weiteren Ausgestaltung grenzt der zweite Teilbereich der negativen Fase vorzugsweise unmittelbar an die Hauptschneidkante an.

Dies führt zu einer Entlastung der Hauptschneidkante und trägt somit positiv zu deren Gesamtstabilität bei.

Gemäß einer weiteren Ausgestaltung grenzt der erste Teilabschnitt der Profillinie unmittelbar an den ersten Teilbereich der negativen Fase an. Gleichermaßen grenzt der fünfte Teilabschnitt der Profillinie in dieser Ausgestaltung unmittelbar an den dritten Teilbereich der negativen Fase an.

Dementsprechend grenzt der erste Wandungsbereich der Spanmulde in dieser Ausgestaltung unmittelbar an den ersten Teilbereich der negativen Fase an und der fünfte Wandungsbereich der Spanmulde grenzt unmittelbar an den dritten Teilbereich der negativen Fase an. Der erste und der dritte Teilbereich der negativen Fase sind vorzugsweise jeweils als eine Planfläche ausgestaltet.

Gemäß einer weiteren Ausgestaltung verläuft eine erste Grenzlinie zwischen der Spanmulde und dem ersten Teilbereich der negativen Fase in einer Draufsicht betrachtet unter einem ersten Winkel α relativ zu der Hauptschneidkante, wobei gilt 30° ≤ α < 90°. Entsprechend verläuft eine zweite Grenzlinie zwischen der Spanmulde und dem zweiten Teilbereich der negativen Fase in einer Draufsicht betrachtet unter einem zweiten Winkel α₂ relativ zu der Hauptschneidkante, wobei α₂ der Gegenwinkel zu α ist.

Gemäß einer weiteren Ausgestaltung sind in der Spanmulde mehrere Erhöhungen angeordnet, die von einer in der Spanmulde angeordneten Bodenfläche nach oben hin abstehen, wobei die Erhöhungen parallel zueinander in einer Reihe entlang der Hauptschneidkante angeordnet sind.

Zwischen den einzelnen Erhöhungen ergeben sich jeweils relative Vertiefungen. Während der Bearbeitung eines Werkstücks erfolgt der Hauptspanfluss also im Zwischenraum zwischen den einzelnen Erhöhungen. Der Span wird dadurch seitlich komprimiert. Diese Vorverformung bewirkt eine Versteifung des Spans bereits bevor der Span die hintere Wandung der Spanmulde erreicht. Bei Erreichen der hinteren Wandung der Spanmulde bricht der Span daher vergleichsweise leicht, was wiederum zur wünschenswerten Erzeugung von möglichst kurzen Spänen beiträgt.

Die Anzahl der Erhöhungen ist vorzugsweise ungerade. Beispielsweise können drei, fünf, sieben oder neun Erhöhungen entlang der Hauptschneidkante vorgesehen sein. Vorzugsweise sind die Erhöhungen in gleichen Abständen zueinander entlang der Hauptschneidkante und parallel zu dieser angeordnet.

Gemäß einer weiteren Ausgestaltung grenzen die Erhöhungen unmittelbar an den zweiten Teilbereich der negativen Fase, welcher sich parallel zu der Hauptschneidkante und entlang eines Großteils derer erstreckt, an. Besonders bevorzugt weisen die Erhöhungen jeweils einen Oberflächenabschnitt auf, der in der Fasenebene liegt.

Die negative Fase geht im zentralen Bereich der Hauptschneidkante, also vorzugsweise unmittelbar und tangential in die einzelnen Erhöhungen über. Dies vergrößert die Kompressionswirkung, die aufgrund der Erhöhungen auf den vom Werkstück abgehobenen Span ausgeübt wird. Auch dies trägt somit zusätzlich zu einem möglichst frühzeitigen Spanbruch und damit zu einer Bildung möglichst kurzer Späne bei.

Gemäß einer weiteren Ausgestaltung ist die Spanmulde in jedem Schnitt parallel zu Symmetrieebene konkav ausgestaltet. Parallel zu der Symmetrieebene geschnitten, ist der erste und der fünfte Wandungsbereich vorzugsweise stärker gekrümmt als der zweite und der vierte Wandungsbereich. Der zweite und der vierte Wandungsbereich sind parallel zur Symmetrieebene geschnitten, hingegen vorzugsweise stärker gekrümmt als der mittig angeordnete dritte Wandungsbereich. Die Krümmung der einzelnen Wandungsbereiche in den Längsschnitten betrachtet, nimmt also vorzugsweise von den äußeren Wandungsbereichen zu den weiter innen liegenden Wandungsbereichen ab.

Es versteht sich, dass die vorstehend genannten und die nachstehend noch zu erläuternden Merkmale nicht nur in der jeweils angegebenen Kombination, sondern auch in Alleinstellung oder in anderen Kombinationen verwendbar sind, ohne den Rahmen der vorliegenden Erfindung zu verlassen.

Ausführungsbeispiele der Erfindung sind in den Zeichnungen dargestellt und werden in der nachfolgenden Beschreibung näher erläutert. Es zeigen:
- Fig. 1: eine perspektivische Ansicht eines ersten Ausführungsbeispiels der erfindungsgemäßen Schneidplatte;
- Fig. 2: eine perspektivische Ansicht eines Ausführungsbeispiels eines Werkzeugs, in dem die erfindungsgemäße Schneidplatte zum Einsatz kommen kann;
- Fig. 3: eine Draufsicht von oben auf das in Fig. 1 dargestellte erste Ausführungsbeispiel der erfindungsgemäßen Schneidplatte;
- Fig. 4: eine Seitenansicht des in Fig. 1 dargestellten ersten Ausführungsbeispiels der erfindungsgemäßen Schneidplatte;
- Fig. 5: eine Detailansicht der in Fig. 3 gezeigten Draufsicht von oben;
- Fig. 6: der in Fig. 4 angedeutete Schnitt B-B;
- Fig. 7: der in Fig. 3 angedeutete Schnitt A-A;
- Fig. 8: die Ansicht der Schneidplatte aus Fig. 5, wobei weitere geometrische Beziehungen eingezeichnet sind;
- Fig. 9: die Ansicht der Schneidplatte aus Fig. 6, wobei weitere geometrische Beziehungen eingezeichnet sind;
- Fig. 10: die Ansicht der Schneidplatte aus Fig. 7, wobei weitere geometrische Beziehungen eingezeichnet sind;
- Fig. 11: ein zweites Ausführungsbeispiel der erfindungsgemäßen Schneidplatte in einer Draufsicht von oben, ähnlich wie sie in den Fig. 5 und 8 dargestellt ist; und
- Fig. 12: das zweite Ausführungsbeispiel der erfindungsgemäßen Schneidplatte in einer Schnittansicht, ähnlich wie sie in den Fig. 6 und 9 dargestellt ist.

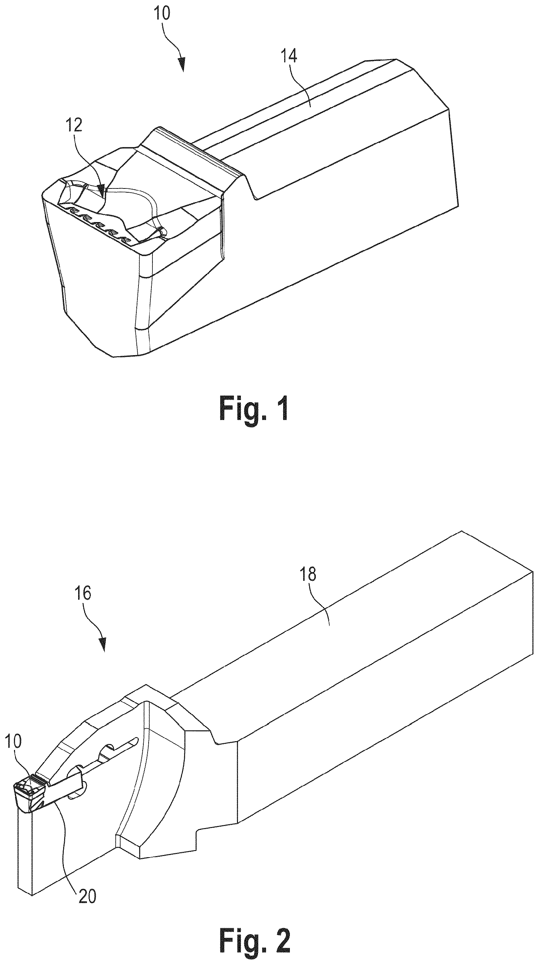

Ein erstes Ausführungsbeispiel der erfindungsgemäßen Schneidplatte ist in Fig. 1 in einer perspektivischen Ansicht dargestellt. Die Schneidplatte ist darin in ihrer Gesamtheit mit der Bezugsziffer 10 bezeichnet.

An ihrem vorderen Ende weist die Schneidplatte 10 einen Schneidenbereich 12 auf, der während der Bearbeitung eines Werkstücks zumindest teilweise mit dem Werkstück in Kontakt tritt. Die Form dieses Schneidenbereichs 12 ist daher wesentlich für die Spanbildung, also die Bildung der von dem Werkstück abgehobenen Späne.

Im hinteren Bereich weist die Schneidplatte 10 einen Einspannabschnitt 14 auf. Dieser Einspannabschnitt 14 dient der Einspannung der Schneidplatte 10 in einem Werkzeughalter. Der Einspannabschnitt 14 ist steg- oder balkenförmig ausgestaltet und weist vorzugsweise einen vieleckigen oder prismatischen Querschnitt auf.

Fig. 2 zeigt ein beispielhaftes Werkzeug 16, in dem die erfindungsgemäße Schneidplatte 10 zum Einsatz kommen kann. Das in Fig. 2 gezeigte Werkzeug 16 ist als Drehwerkzeug ausgestaltet. Dieses Drehwerkzeug 16 eignet sich insbesondere zum Stechdrehen bzw. Einstechdrehen. Es versteht sich jedoch, dass das in Fig. 2 gezeigte Werkzeug nur ein beliebiges Beispiel einer Vielzahl von Werkzeugen ist, in dem die erfindungsgemäße Schneidplatte 10 eingesetzt werden kann.

Das in Fig. 2 gezeigte Werkzeug 16 weist einen Werkzeughalter 18 auf, der in seinem hinteren Bereich im Wesentlichen balkenförmig ausgestaltet ist und im Bereich seines vorderen Endes eine Schneidplattenaufnahme 20 aufweist, die der Aufnahme der Schneidplatte 10 dient. Die Schneidplattenaufnahme 20 ist in dem in Fig. 2 gezeigten Ausführungsbeispiel selbstklemmend ausgestaltet, so dass keine weiteren Befestigungsmittel notwendig sind, um die Schneidplatte 10 in der Schneidplattenaufnahme 20 zu fixieren. In einer Vielzahl weiterer bekannter Werkzeughalter werden jedoch weitere Befestigungsmittel, wie beispielsweise eine Spannschraube, verwendet, um die Schneidplatte 10 in der Schneidplattenaufnahme 20 einzuspannen. Es versteht sich, dass auch dies bei dem erfindungsgemäßen Werkzeug 16 grundsätzlich möglich ist, ohne den Rahmen der vorliegenden Erfindung zu verlassen.

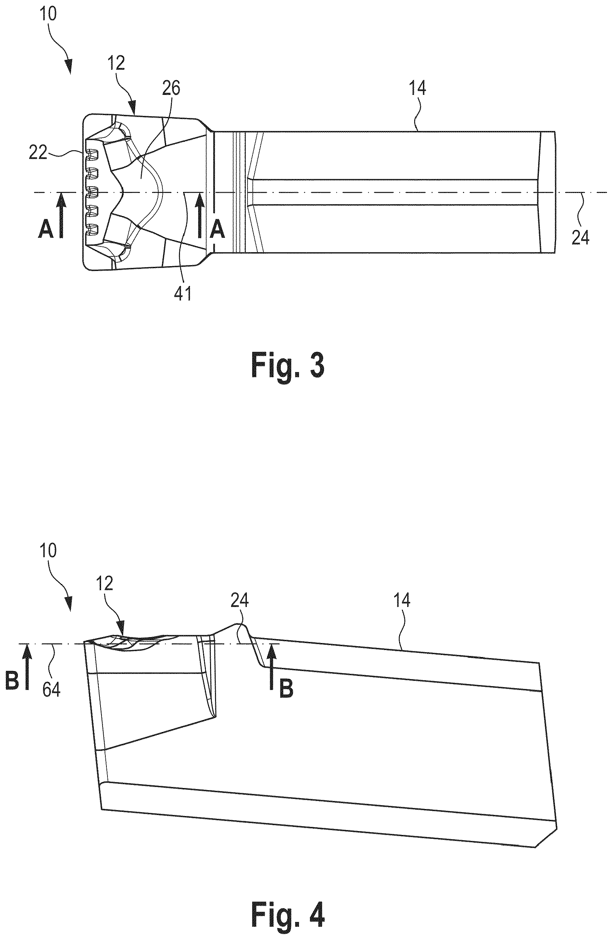

Die Fig. 3-10 zeigen weitere Ansichten der erfindungsgemäßen Schneidplatte 10 gemäß des in Fig. 1 gezeigten ersten Ausführungsbeispiels. Wie insbesondere aus Fig. 3 erkennbar ist, weist die Schneidplattenaufnahme 10 an ihrem vorderen, stirnseitigen Ende eine Hauptschneidkante 22 auf, die geradlinig ausgestaltet ist. Die Hauptschneidkante 22 verläuft orthogonal zu einer Längsrichtung des Schneidenbereichs 12. Diese Längsrichtung ist in Fig. 3 und 4 als gestrichelte Linie dargestellt, die mit der Bezugsziffer 24 gekennzeichnet ist.

Des Weiteren weist die Schneidplatte 10 in dem Schneidenbereich 12 eine Spanmulde 26 auf. Diese Spanmulde 26 ist als Vertiefung bzw. als Materialausnehmung ausgestaltet. Sie erstreckt sich vorzugsweise über einen Großteil der Breite des Schneidenbereichs 12.

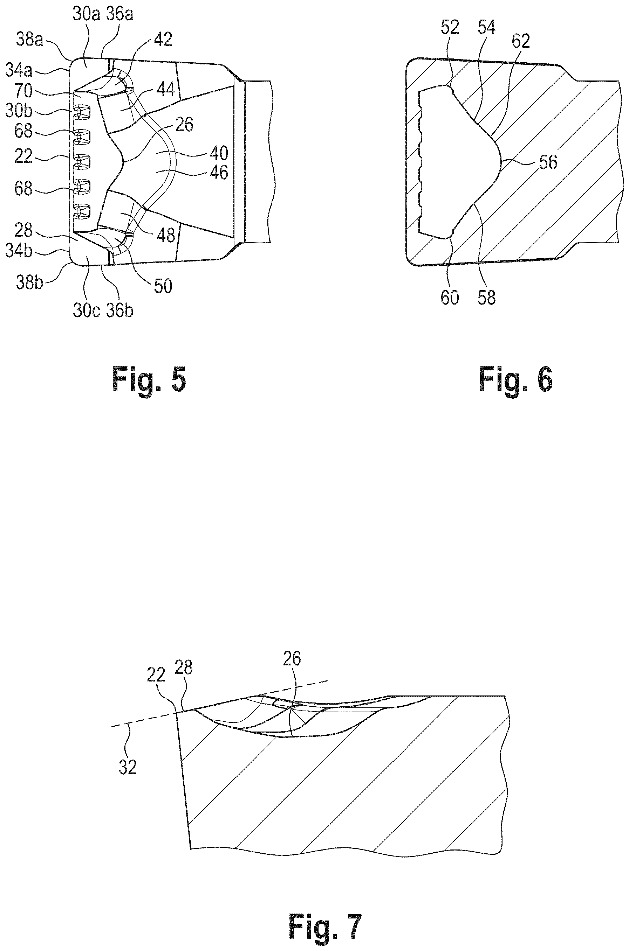

Im Schneidenbereich 12 ist ferner eine Fase 28 vorgesehen, die aufgrund ihrer Ausrichtung in der Fachsprache auch als negative Fase bezeichnet wird. Die Fase 28 ist in drei Teilbereiche 30a-30c aufgeteilt. Alle drei Teilbereiche 30a-30c der Fase 28 sind in einer gemeinsamen planaren Ebene angeordnet. Diese Ebene wird vorliegend als "Fasenebene" bezeichnet. Die Fasenebene ist in Fig. 7 mit einer gestrichelten Linie dargestellt, die mit der Bezugsziffer 32 versehen ist. Die Fasenebene 32 ist unter einem spitzen Winkel relativ zu der Längsrichtung 24 des Schneidenbereichs 12 ausgerichtet. Da dieser Winkel einen negativen Spanwinkel bildet, wird die Fase 28, wie bereits erwähnt, grundsätzlich auch als negative Fase bezeichnet.

Aufgrund des negativen Spanwinkels steht die Fasenebene 32 über die Spanmulde 26 nach oben hin ab. Die Spanmulde 26 ist also unterhalb der Fasenebene 32 angeordnet und wird von dieser nicht geschnitten.

Die Fase 28 umgibt die Spanmulde 26 zumindest teilweise. Die Fase 28 verläuft vorzugsweise entlang der gesamten Länge der Hauptschneidkante 22. Ein erster Teilbereich 31a der Fase 28 grenzt an ein erstes Ende 34a der Hauptschneidkante 22 an. Der dritte Teilbereich 30c der Fase 28 grenzt an das gegenüberliegende Ende 34b der Hauptschneidkante 22 an. Beide Teilbereiche 30a, 30c sind als Planflächen ausgestaltet, die die beiden vorderen Eckenbereiche des Schneidenbereichs 12 bilden.

Nach vorne hin sind die beiden Teilbereiche 30a, 30c durch die Hauptschneidkante 22 begrenzt. Seitlich sind die beiden Teilbereiche 30a, 30c einerseits an ihrer jeweiligen Innenseite durch die Spanmulde 26 sowie an ihrer jeweiligen Außenseite durch eine Nebenschneidkante 36a bzw. 36b begrenzt. Die beiden genannten Nebenschneidkanten 36a, 36b bilden die seitlichen äußeren Enden des Schneidenbereichs 12. Die Nebenschneidkanten 36a, 36b sind jeweils über einen Radius 38a, 38b mit den Enden 34a bzw. 34b der Hauptschneidkante 22 verbunden. Anstelle von Radien 38a, 38b können zwischen den Nebenschneidkanten 36a, 36b und der Hauptschneidkante auch jeweils Fasen als Übergänge vorgesehen sein.

Der zweite Teilbereich 30b der Fase 28 erstreckt sich zwischen dem ersten Teilbereich 30a und dem dritten Teilbereich 30c. Dieser zweite Teilbereich 30b der Fase 28 erstreckt sich zumindest entlang eines Großteils der Hauptschneidkante 22 und verläuft parallel zu dieser. Vorzugsweise grenzt der zweite Teilbereich 30b der Fase 28 unmittelbar an die Hauptschneidkante 22 an. Auch dieser zweite Teilbereich 30b ist als Planfläche ausgestaltet, der mit den beiden Planflächen, die die Teilbereiche 30a, 30c bilden, in ein und derselben Fasenebene 32 angeordnet ist.

Die Spanmulde 26 ist an ihrem vorderen, auf die Schneidkante 22 zuweisenden Ende durch den zweiten Teilbereich 30b der Fase 28 begrenzt. An ihrem gegenüberliegenden, hinteren Ende wird die Spanmulde 26 durch eine Wandung 40 begrenzt. Diese Wandung 40 bildet den, in Längsrichtung 24 betrachtet, hinteren Bereich der Spanmulde 26. Die Wandung 40 erstreckt sich vorzugsweise über einen Großteil (mehr als 50 %) der Breite des Schneidenbereichs 12.

Gesamthaft ist die Spanmulde 26 spiegelsymmetrisch zu einer Symmetrieebene 41 ausgestaltet. Diese Symmetrieebene 41 ist in Fig. 3 als gestrichelte Linie dargestellt und entspricht der ebenfalls in Fig. 3 angedeuteten Schnittebene A-A. Die Symmetrieebene 41 verläuft orthogonal zu der Hauptschneidkante 22 und hat von den beiden Enden 34a, 34b der Hauptschneidkante 22 den gleichen Abstand. Die Symmetrieebene 41 verläuft also durch einen Mittelpunkt der Hauptschneidkante 22.

Entsprechend der Symmetrieeigenschaften der Spanmulde 26 ist demnach auch die Wandung 40 spiegelsymmetrisch zu der Symmetrieebene 41 ausgestaltet. Die Wandung 40 weist fünf Wandungsbereiche 42, 44, 46, 48, 50 auf, die in aufsteigender Reihenfolge der Reihe nach aneinander angrenzen. Der erste Wandungsbereich 42 ist spiegelsymmetrisch zu dem fünften Wandungsbereich 50 ausgestaltet. Diese beiden Wandungsbereiche 42, 50 bilden jeweils die äußeren Endbereiche der Wandung 40. An den ersten Wandungsbereich 42 angrenzend ist der zweite Wandungsbereich 44 angeordnet. Entsprechend ist an den fünften Wandungsbereich 50 angrenzend der vierte Wandungsbereich 48 angeordnet, welcher spiegelsymmetrisch zu dem zweiten Wandungsbereich 42 ausgestaltet ist. Zwischen dem zweiten Wandungsbereich 44 und dem vierten Wandungsbereich 48 ist der dritte Wandungsbereich 46 angeordnet, der in Breitenrichtung der Schneidplatte 10, also quer zu der Längsrichtung 24 betrachtet, den mittleren Bereich der Wandung 40 bildet. Vorzugsweise ist dieser dritte Wandungsbereich 46 der flächenmäßig größte der fünf Wandungsbereiche 42-50. Der dritte Wandungsbereich 46 wird durch die Symmetrieebene 41 in zwei gleichgroße, spiegelbildliche Hälften aufgeteilt.

Zur näheren Erläuterung der einzelnen Wandungsbereiche 42-50 der Wandung 40 dient im Folgenden eine Profillinie 62, die in Fig. 6 dargestellt ist. Diese Profillinie 62 ergibt sich durch einen Schnitt entlang der in Fig. 4 eingezeichneten Schnittebene B-B. Diese Schnittebene B-B entsprich einer imaginären Ebene 64, die orthogonal zu der Symmetrieebene 41 ausgerichtet ist und parallel zu der Längsrichtung 24 des Schneidenbereichs 12 verläuft.

Entsprechend der fünf Wandungsbereiche 42-50 der Wandung 40 weist auch die Profillinie 62 fünf Teilabschnitte 52, 54, 56, 58, 60 auf. Der erste Teilabschnitt 52 der Profillinie 62 ergibt sich durch den Schnitt der imaginären Ebene 64 mit dem ersten Wandungsbereich 42. Der zweite Teilabschnitt 54 der Profillinie 62 ergibt sich durch den Schnitt der imaginären Ebene 64 mit dem zweiten Wandungsbereich 44. Der dritte Teilabschnitt 56 der Profillinie 62 ergibt sich durch den Schnitt der imaginären Ebene 64 mit dem dritten Wandungsbereich 46. Der vierte Teilabschnitt 58 der Profillinie 62 ergibt sich durch den Schnitt der imaginären Ebene 64 mit dem vierten Wandungsbereich 48. Der fünfte Teilabschnitt 60 der Profillinie 62 ergibt sich durch den Schnitt der imaginären Ebene 64 mit dem fünften Wandungsbereich 50.

Entsprechend grenzen die fünf Teilabschnitte 52-60 der Profillinie 62 ebenso wie die Wandungsbereiche 42-50 in aufsteigender Reihenfolge der Reihe nach aneinander an. Der erste Teilabschnitt 52 ist spiegelbildlich zu dem fünften Teilabschnitt 60 ausgestaltet. Der zweite Teilabschnitt 54 ist spiegelbildlich zu dem vierten Teilabschnitt 58 ausgestaltet. Der dritte Teilabschnitt 56 wird durch die Symmetrieebene 41 in zwei gleichgroße, spiegelbildliche Hälften aufgeteilt und bildet den mittleren Bereich der Profillinie 62, der den zweiten Teilabschnitt 54 mit dem vierten Teilabschnitt 58 verbindet.

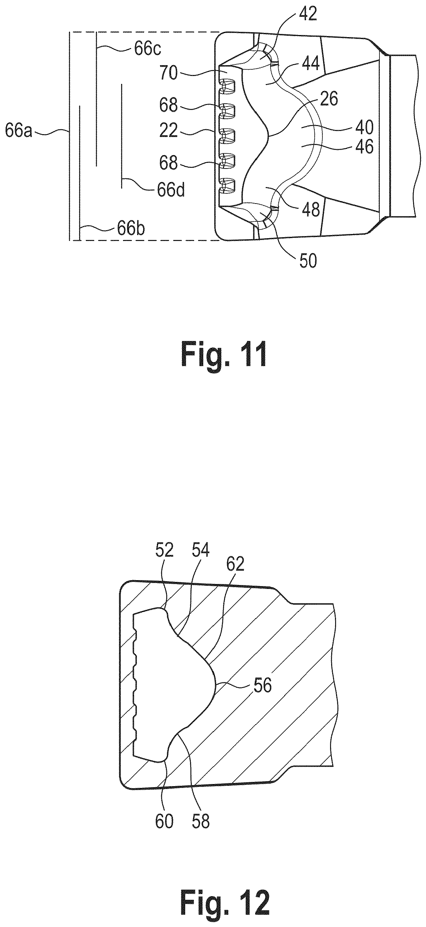

Der erste, der dritte und der fünfte Teilabschnitt 52, 56, 60 sind jeweils konkav ausgestaltet. Der zweite und der vierte Teilabschnitt 54, 58 sind jeweils geradlinig oder konvex ausgestaltet. In der in Fig. 6 gezeigten Schnittansicht des ersten Ausführungsbeispiels sind der zweite und der vierte Teilabschnitt 54, 58 jeweils geradlinig ausgestaltet. In der in Fig. 12 gezeigten Ansicht der Schneidplatte 10 gemäß des zweiten Ausführungsbeispiels sind der zweite Teilabschnitt 54 und der vierte Teilabschnitt 58 hingegen jeweils konvex ausgestaltet. Ansonsten unterscheidet sich das in Fig. 11 und 12 gezeigte Ausführungsbeispiel nicht von dem in Fig. 3-7 dargestellten ersten Ausführungsbeispiel.

Der erste Wandungsbereich 42 und der fünfte Wandungsbereich 50 der Wandung 40 haben im Vergleich zu den übrigen Wandungsbereichen 44, 46, 48 den kürzesten Abstand von der Hauptschneidkante 22. Zumindest hat zumindest ein Punkt auf dem ersten Teilabschnitt der Profillinie 62 einen geringeren Abstand von der Hauptschneidkante 22 als alle Punkte auf dem zweiten, dem dritten und dem vierten Teilabschnitt 54, 56, 58 der Profillinie 62. Vorzugsweise haben sogar alle Punkte auf dem ersten Teilabschnitt 52 der Profillinie 62 einen geringeren Abstand von der Hauptschneidkante 22 als alle Punkte auf dem zweiten, dem dritten und dem vierten Teilabschnitt 54, 56, 58 der Profillinie 62.

Es versteht sich, dass aufgrund der beschriebenen Symmetrieeigenschaften der Spanmulde 26 bzw. der Wandung 40 selbige Abstandbeziehungen auch bezüglich des fünften Wandungsbereichs 50 bzw. bezüglich des fünften Teilabschnitts 60 gelten.

Der dritte Wandungsbereich 46 hat den größten Abstand von der Hauptschneidkante 22. Dementsprechend haben alle Punkte auf dem zweiten und dem vierten Teilabschnitt 54, 58 der Profillinie 62 einen geringeren Abstand von der Hauptschneidkante 22 als alle Punkte auf dem dritten Teilabschnitt 56 der Profillinie 62.

Die einzelnen Teilabschnitte 52-60 der Profillinie 62 sind vorzugsweise jeweils knickfrei ausgestaltet. Sie bilden also jeweils eine Kurve, die stetig und differenzierbar ist.

Gemäß der in Fig. 5 und 6 gezeigten ersten Ausführungsbeispiele der Schneidplatte 10 gehen die fünf Wandungsbereiche 42-50 der Wandung 40 nicht tangential ineinander über. Zwischen den einzelnen Teilabschnitten 52-60 der Profillinie 62 ergeben sich an den jeweiligen Übergangsstellen also Knicke. Gemäß des in Fig. 11 und 12 gezeigten zweiten Ausführungsbeispiels der erfindungsgemäßen Schneidplatte 10 ergeben sich derartige Knicke jedoch nur zwischen dem ersten Wandungsbereich 42 und dem zweiten Wandungsbereich 44 sowie zwischen dem vierten Wandungsbereich 48 und dem fünften Wandungsbereich 50. Der zweite Wandungsbereich 44 geht gemäß des zweiten Ausführungsbeispiels hingegen tangential in den dritten Wandungsbereich 46 über. Gleichermaßen geht der dritte Wandungsbereich 46 gemäß des zweiten Ausführungsbeispiels auch tangential in den vierten Wandungsbereich 48 über.

Beide vorliegend bezeichneten Ausführungsbeispiele der erfindungsgemäßen Schneidplatte haben jedoch gemeinsam, dass der erste und der fünfte Teilabschnitt 52, 60 der Profillinie 62 vorzugsweise stärker gekrümmt ist als der mittig angeordnete dritte Teilabschnitt 56 der Profillinie 62. Ebenso ist es gemäß beider gezeigter Ausführungsbeispiele bevorzugt, dass der mittig angeordnete dritte Teilabschnitt 56 der Profillinie 62 den vergleichsweise längsten aller fünf Teilabschnitte 52-60 bildet.

Wie in der Beschreibungseinleitung bereits erläutert, eignet sich die erfindungsgemäße Schneidplatte 10 insbesondere aufgrund der beschriebenen Form der Spanmulde 26 sowie aufgrund des Vorhandenseins der negativen Fase 28 sowohl zum Einstechen von Vollschnitten als auch zum Einstechen von Teilschnitten als auch zum sogenannten Stegstechen. Um zu verdeutlichen, was mit den verschiedenen Bearbeitungsvarianten gemeint ist, sind in Fig. 11 mehrere Hilfslinien 66a-66d gezeigt.

Die Hilfslinien 66b und 66c deuten den Arbeitsbereich der Schneidplatte 10 während eines Teilschnitts an. Hierbei tritt die Schneidplatte 10 nur entlang eines Teilabschnitts der Hauptschneidkante 22 mit dem zu bearbeitenden Werkzeug in Kontakt. Die Hilfslinie 66b deutet einen Teilschnitt an, der sich ausgehend von dem zweiten Ende 34b der Hauptschneidkante 22 bzw. ausgehend von dem Radius 38b bis zu einem beliebigen Punkt auf der Hauptschneidkante 22 erstreckt, der zwischen den beiden Enden 34a, 34b der Hauptschneidkante 22 liegt. Die Hilfslinie 66c deutet hingegen einen Teilschnitt an, der sich ausgehend von dem ersten Ende 34a bzw. dem Radius 38a bis zu einem beliebigen Punkt auf der Hauptschneidkante 22 erstreckt, der zwischen den beiden Enden 34a, 34b der Hauptschneidkante 22 angeordnet ist. Vorzugsweise werden für derartige Teilschnitte 60-80 % der Gesamtlänge der Hauptschneidkante 22 verwendet.

Die Hilfslinie 66d deutet einen beispielhaften Arbeitsbereich während des Stegstechens an. Wie der Name schon sagt, bearbeitet die Schneidplatte 10 während des Stegstechens einen auf dem zu bearbeitenden Werkstück vorgesehenen Steg. Diese Bearbeitung erfolgt vorzugsweise mit einem zentrischen Bereich der Hauptschneidkante 22, der symmetrisch zu der Symmetrieebene 41 ist. Je nach Breite des zu bearbeitenden Stegs kommt hierbei üblicherweise 10-60 % der Gesamtlänge der Hauptschneidkante 22 mit dem Werkstück in Eingriff.

Bei einem Vollschnitt, wie er durch die Hilfslinie 66a angedeutet ist, läuft ein Teil des vom Werkstück abgehobenen Spans über die in den Schneidenecken angeordneten Teilbereiche 30a und 30c der negativen Fase 28 ab. Diese Teilbereiche 30a, 30c stabilisieren dabei die Schneidenecken. Der zentral angeordnete zweite Teilbereich 30b der negativen Fase 28 stabilisiert den zentralen Bereich der Hauptschneidkante 22. Bei einem Vollschnitt, bei dem die gesamte Hauptschneidkante 22 zur Bearbeitung des Werkstücks verwendet wird, tragen insbesondere der erste und der dritte Teilbereich 30a, 30c der negativen Fase 28 zu einer Stabilisierung der Schneidenecken bei. Dies ermöglicht hohe Standzeiten. Der mittlere Bereich der hinteren Wandung 40 der Spanmulde 26, also der zweite, dritte und vierte Wandungsbereich 44, 46, 48, werden bei einem Vollschnitt nicht, oder zumindest nur minimal belastet. Der zweite, dritte und vierte Wandungsbereich 44, 46, 48 der hinteren Wandung der Spanmulde 26 beeinflussen die Bearbeitung während eines Vollschnitts daher gar nicht oder zumindest nur sehr geringfügig.

Während eines Teilschnitts, wie er durch die Hilfslinie 66b angedeutet ist, fungieren hingegen im Wesentlichen der dritte Teilbereich 30c der negativen Fase 28 sowie der zweite Wandungsbereich 44 als Funktionsflächen, die die Spanbildung wesentlich beeinflussen. Auf diesen beiden einander gegenüberliegenden Flächen 30c, 44 läuft ein Großteil des vom Werkstück abgehobenen Spans auf. Auch in diesem Fall lässt sich aufgrund der Form dieser beiden Flächen 30c, 44 eine seitliche Spanverjüngung erzielen, so dass sich auch bei der Bearbeitung eines Teilschnitts kurze Spiralspäne erzeugen lassen. Ähnliches gilt für eine Teilschnitt-Bearbeitung, wie sie durch die Hilfslinie 66c angedeutet ist. In diesem Fall fungieren der erste Teilbereich 30a der negativen Fase 28 und der vierte Wandungsbereich 48 als einander gegenüberliegende Funktionsflächen, die die Spanbildung wesentlich beeinflussen.

Im Falle des Stegstechens, wie es beispielsweise durch die Hilfslinie 66d angedeutet ist, ist insbesondere der mittlere Teil der Wandung 40, also der konkav gekrümmte dritte Wandungsbereich 46 maßgeblich für die Spanbildung bzw. Spanformung verantwortlich. Insbesondere in diesem Fall stabilisiert der zweite Teilbereich 30b der negativen Fase 28 den in Eingriff mit dem zu bearbeitenden Werkstück stehenden zentralen Bereich der Hauptschneidkante 22. Die konkave Krümmung des dritten Wandungsbereichs 46 der Wandung 40 sorgt wiederum für eine seitliche Spanverjüngung, die einen vergleichsweise frühen Spanbruch ermöglicht und somit auch beim Stegstechen die Bildung vergleichsweise kurzer Späne garantiert.

Zur weiteren Verbesserung der Spanbildung können im Schneidenbereich 12 der erfindungsgemäßen Schneidplatte 10 mehrere Erhöhungen 68 vorgesehen sein. In den beiden vorliegend gezeigten Ausführungsbeispielen der erfindungsgemäßen Schneidplatte 10 sind insgesamt fünf dieser Erhöhungen 68 in der Spanmulde 26 angeordnet. Die Erhöhungen 68 sind parallel zueinander in einer Reihe entlang der Hauptschneidkante 22 angeordnet. Sie stehen von einer in der Spanmulde 26 angeordneten Bodenfläche 70 ab, die vorzugsweise als planare Fläche ausgestaltet ist und an den zweiten Teilbereich 30b der negativen Fase 28 angrenzt.

Zwischen den Erhöhungen 68 ergeben sich relative Vertiefungen bzw. kanalartige Durchtritte. Die Erhöhungen 68 sorgen daher für eine Art Vorverformung des Spans, bevor er die hintere Wandung 40 der Spanmulde 26 erreicht. Dies trägt zu einem weiter verbesserten Spanbruch und damit zur Bildung noch kürzerer Späne bei. Es versteht sich jedoch, dass die erfindungsgemäße Schneidplatte 10 auch ohne die Erhöhungen 68 ausgestaltet sein kann, ohne den Rahmen der vorliegenden Erfindung zu verlassen.

Sofern die Erhöhungen 68 an der Schneidplatte 10 vorgesehen sind, ist es bevorzugt, dass diese unmittelbar an den zweiten Teilbereich 30b der negativen Fase 28 angrenzen. Besonders bevorzugt weist jede der Erhöhungen 68 jeweils einen Oberflächenabschnitt auf, der in der Fasenebene 32 liegt. Die Erhöhungen 68 gehen mit anderen Worten also bevorzugt tangential in den zweiten Teilbereich 30b der negativen Fase 28 über. Dies trägt zu einer weiteren Stabilisierung der Hauptschneidkante 22 bei.

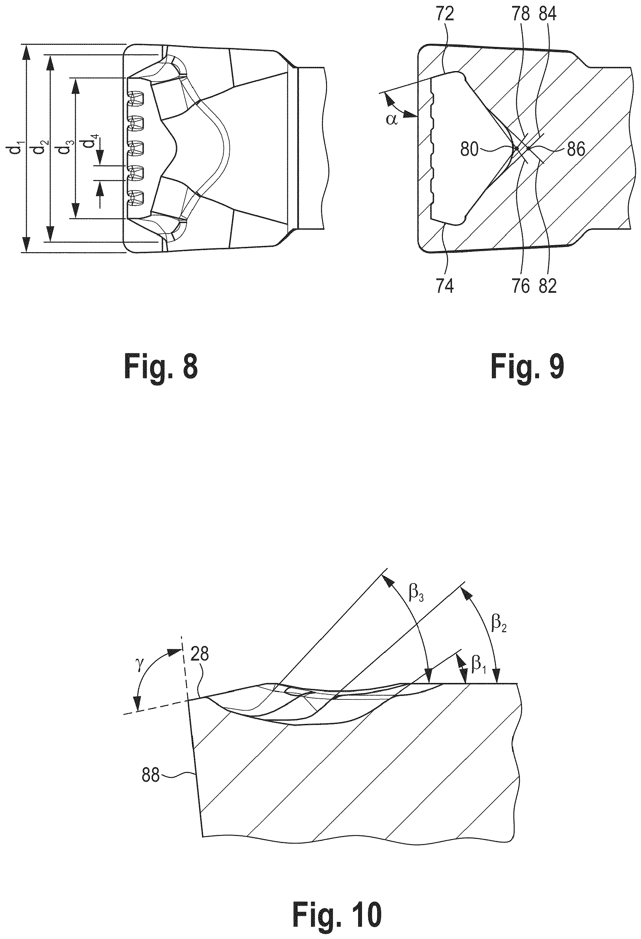

Weitere bevorzugte Größenbeziehungen und geometrische Ausgestaltungen der Spanmulde 26 werden im Folgenden anhand der Fig. 8-10 näher erläutert.

Die Breite d₂ der Spanmulde 26 beträgt vorzugsweise 75-95 % der Gesamtbreite d₁ der Schneidplatte 10 im Schneidenbereich 12. Die Breite d₃ des zweiten Teilbereichs 30b der negativen Fase 28, welche der Breite der Bodenfläche 70 entspricht, beträgt vorzugsweise 60-90 % der Gesamtbreite d₁ der Schneidplatte 10 im Schneidenbereich 12. Ferner beträgt die Breite d₄ der Erhöhungen 68 vorzugsweise 5-12 % der Breite d₃. Es gilt also vorzugsweise: d₁ > d₂ ≥ d₃ > d₄.

Wie insbesondere auf Fig. 9 hervorgeht, beträgt der Winkel α, den die Hauptschneidkante 22 mit einer Grenzlinie 72 einschließt, die sich zwischen der Spanmulde 26 und dem ersten Teilbereich 30a der Fase 28 erstreckt, vorzugsweise 30°-90°. Es versteht sich, dass die gegenüberliegende Grenzlinie 74, welche sich zwischen dem dritten Teilbereich 30c der Fase 28 und der Spanmulde erstreckt, den entsprechenden Gegenwinkel mit der Hauptschneidkante 22 einschließt.

In Fig. 9 ist des Weiteren eine Tangente 76 eingezeichnet, welche den zweiten Teilabschnitt 54 der Profillinie 62 in dem Übergangspunkt zwischen dem zweiten Teilabschnitt 54 und dem ersten Teilabschnitt 52 tangiert. Die eingezeichnete Tangente 78 tangiert den vierten Teilabschnitt 58 der Profillinie 62 an dem Übergangspunkt zwischen dem fünften Teilabschnitt 60 und dem vierten Teilabschnitt 58. Die Tangenten 76, 78 kreuzen sich in einem Punkt 80. Des Weiteren sind in Fig. 9 die Tangenten 82 und 84 eingezeichnet. Die Tangente 82 tangiert den dritten Teilabschnitt 56 der Profillinie 62 in dem Übergangspunkt zwischen dem zweiten Teilabschnitt 54 und dem dritten Teilabschnitt 56. Die Tangente 84 tangiert den dritten Teilabschnitt 56 der Profillinie 62 in dem Übergangspunkt zwischen dem dritten Teilabschnitt 56 und dem vierten Teilabschnitt 58. Die Tangenten 82, 84 schneiden sich in dem Punkt 86. Dieser Punkt 86 hat einen größeren Abstand von der Hauptschneidkante 22 als der Punkt 80.

Ferner lässt sich aus dem in Fig. 10 dargestellten Längsschnitt erkennen, dass die Spanmulde 26 vorzugsweise in jedem Schnitt parallel zu der Symmetrieebene 41 konkav gekrümmt ist. Vorzugsweise sind der zweite Wandungsbereich 44 und der vierte Wandungsbereich 48 stärker gekrümmt als der dritte Wandungsbereich 46. Dies wird u.a. durch die in Fig. 10 eingezeichneten Winkel β₁ und β₂ verdeutlicht. Ebenso ist es bevorzugt, dass der erste Wandungsbereich 42 und der fünfte Wandungsbereich 50 jeweils stärker gekrümmt sind als der zweite Wandungsbereich 44 und der vierte Wandungsbereich 48 (siehe Winkel β₃). Vorzugsweise gilt also β₃ > β₂ > β₁.

Die Hauptschneidkante 22 ist am Übergang zwischen der in der Fasenebene 32 angeordneten Fase 28 und einer Freifläche 88 ausgebildet. Diese Freifläche 88 bildet die vordere Stirnseite der Schneidplatte 10. Die Fase 28 ist unter einem Winkel γ gegenüber der Freifläche 88 geneigt, wobei gilt γ ≥ 90°. Besonders bevorzugt gilt γ > 90°.

## Patentansprüche

1. Schneidplatte (10) für ein Werkzeug (16) zur spanenden Bearbeitung, wobei die Schneidplatte (10) in einem Schneidenbereich (12) Folgendes aufweist:
- eine Hauptschneidkante (22), die geradlinig ausgestaltet ist und orthogonal zu einer Längsrichtung (24) des Schneidenbereichs (12) verläuft;
- eine Fase (28), die in drei Teilbereiche (30a, 30b, 30c) aufgeteilt ist, welche alle in einer gemeinsamen Fasenebene (32) angeordnet sind, wobei ein erster der drei Teilbereiche (30a) angrenzend an ein erstes Ende (34a) der Hauptschneidkante (22) angeordnet ist, ein zweiter der drei Teilbereiche (30b) sich entlang zumindest eines Großteils der Hauptschneidkante (22) und parallel zu dieser erstreckt und ein dritter der drei Teilbereiche (30c) angrenzend an ein zweites Ende (34b) der Hauptschneidkante (22) angeordnet ist; und
- eine Spanmulde (26), die als Vertiefung ausgestaltet ist,
**dadurch gekennzeichnet, dass** die Spannmulde (26) seitlich durch den ersten und den dritten Teilbereich (30a, 30c) der Fase (28) begrenzt ist, in ihrem vorderen, auf die Hauptschneidkante (22) zuweisenden Endbereich durch den zweiten Teilbereich (30b) der Fase begrenzt (28) ist und in ihrem gegenüberliegenden, hinteren Bereich durch eine Wandung (40) begrenzt ist;
wobei die Spanmulde (26) inklusive der Wandung (40) spiegelsymmetrisch zu einer Symmetrieebene (41) ist, die orthogonal zu der Hauptschneidkante (22) ausgerichtet ist und durch einen Mittelpunkt der Hauptschneidkante (22) verläuft, wobei die Spanmulde (26) inklusive der Wandung (40) unterhalb der Fasenebene (32) angeordnet ist und diese nicht schneidet,
wobei die Wandung (40) fünf Wandungsbereiche (42, 44, 46, 48, 50) aufweist, die in aufsteigender Reihenfolge der Reihe nach aneinander angrenzen, wobei ein erster der fünf Wandungsbereiche (42) und ein fünfter der fünf Wandungsbereiche (50) bezüglich der Symmetrieebene (41) spiegelbildlich zu einander ausgestaltet sind, wobei ein zweiter der fünf Wandungsbereiche (44) und ein vierter der fünf Wandungsbereiche (48) bezüglich der Symmetrieebene (41) spiegelbildlich zu einander ausgestaltet sind, und wobei ein dritter der fünf Wandungsbereiche (46) durch die Symmetrieebene (41) in zwei spiegelbildliche Hälften aufgeteilt wird,
wobei eine Profillinie (62) der Wandung (40), die sich durch einen Schnitt der Wandung (40) mit einer imaginären Ebene (64) ergibt, welche orthogonal zu der Symmetrieebene (41) ausgerichtet ist und entlang der Längsrichtung (24) verläuft, einen in dem ersten Wandungsbereich (42) angeordneten ersten Teilabschnitt (52), einen in dem zweiten Wandungsbereich (44) angeordneten zweiten Teilabschnitt (54), einen in dem dritten Wandungsbereich (46) angeordneten dritten Teilabschnitt (56), einen in dem vierten Wandungsbereich (48) angeordneten vierten Teilabschnitt (58) und einen in dem fünften Wandungsbereich (50) angeordneten fünften Teilabschnitt (60) aufweist,
wobei der erste, der dritte und der fünfte Teilabschnitt (52, 56, 60) jeweils konkav ausgestaltet sind, und wobei der zweite und der vierte Teilabschnitt (54, 58) jeweils geradlinig oder konvex ausgestaltet sind, und
wobei mindestens ein Punkt auf dem ersten Teilabschnitt (52) einen geringeren Abstand von der Hauptschneidkante (22) hat als alle Punkte auf dem zweiten, dem dritten und dem vierten Teilabschnitt (54, 56, 58), und wobei alle Punkte auf dem zweiten und dem vierten Teilabschnitt (54, 58) einen geringeren Abstand von der Hauptschneidkante (22) haben als alle Punkte auf dem dritten Teilabschnitt (56).

2. Schneidplatte nach Anspruch 1, wobei alle Punkte auf dem ersten Teilabschnitt (52) einen geringeren Abstand von der Hauptschneidkante (22) haben als alle Punkte auf dem zweiten, dem dritten und dem vierten Teilabschnitt (54, 56, 58).

3. Schneidplatte nach Anspruch 1 oder 2, wobei die fünf Teilabschnitte (52, 54, 56, 58, 60) jeweils eine Kurve definieren, die stetig und differenzierbar ist.

4. Schneidplatte nach einem der Ansprüche 1-3, wobei die fünf Wandungsbereiche (42, 44, 46, 48, 50) nicht tangential ineinander übergehen.

5. Schneidplatte nach einem der Ansprüche 1-4, wobei der erste Teilabschnitt (52) stärker gekrümmt ist als der dritte Teilabschnitt (56).

6. Schneidplatte nach einem der Ansprüche 1-5, wobei der dritte Teilabschnitt (56) im Vergleich zu den übrigen Teilabschnitten (52, 54, 58, 60) der Profilinie (62) der längste ist.

7. Schneidplatte nach einem der Ansprüche 1-6, wobei der zweite Teilbereich (30b) der Fase (28) unmittelbar an die Hauptschneidkante (22) angrenzt.

8. Schneidplatte nach einem der Ansprüche 1-7, wobei der erste Teilabschnitt (52) der Profillinie (62) unmittelbar an den ersten Teilbereich (30a) der Fase (28) angrenzt, und wobei der fünfte Teilabschnitt (60) der Profillinie (62) unmittelbar an den dritten Teilbereich (30c) der Fase (28) angrenzt.

9. Schneidplatte nach einem der Ansprüche 1-8, wobei eine erste Grenzlinie (72) zwischen der Spanmulde (26) und dem ersten Teilbereich (30a) der Fase (28) in einer Draufsicht betrachtet unter einem ersten Winkel α relativ zu der Hauptschneidkante (22) verläuft, wobei gilt: 30° ≤ α ≤ 90°.

10. Schneidplatte nach einem der Ansprüche 1-9, wobei in der Spanmulde (26) mehrere Erhöhungen (68) angeordnet sind, die von einer in der Spanmulde (26) angeordneten Bodenfläche (70) nach oben hin abstehen, und wobei die Erhöhungen (68) parallel zueinander in einer Reihe entlang der Hauptschneidkante (22) angeordnet sind.

11. Schneidplatte nach Anspruch 10, wobei die Anzahl der Erhöhungen (68) ungerade ist.

12. Schneidplatte nach Anspruch 10 oder 11, wobei die Erhöhungen (68) unmittelbar an den zweiten Teilbereich (30b) der Fase (28) angrenzen.

13. Schneidplatte nach einem der Ansprüche 10-12, wobei die Erhöhungen (68) jeweils einen Oberflächenabschnitt aufweisen, der in der Fasenebene (32) liegt.

14. Schneidplatte nach einem der Ansprüche 1-13, wobei die Spanmulde (26) in jedem Schnitt parallel zu der Symmetrieebene (41) konkav ausgestaltet ist.

15. Werkzeug (16) zur spanabhebenden Bearbeitung eines Werkstücks, mit einer Schneidplatte (10) nach einem der Ansprüche 1-14 und einem Werkzeughalter (18), der zumindest eine Schneidplattenaufnahme (20) zur Aufnahme der Schneidplatte (10) aufweist.

## Claims

1. A cutting insert (10) for a tool (16) for machining, wherein the cutting insert (10) comprises in a cutting region (12):
- a main cutting edge (22) which is rectilinear and runs orthogonally to a longitudinal direction (24) of the cutting region (12);
- a chamfer (28) having three part regions (30a, 30b, 30c) which are all arranged in a common chamfer plane (32), wherein a first of the three part regions (30a) is arranged adjacent to a first end (34a) of the main cutting edge (22), a second of the three part regions (30b) extends along at least a majority of the main cutting edge (22) and parallel thereto, and a third of the three part regions (30c) is arranged adjacent to a second end (34b) of the main cutting edge (22); and
- a chip cavity (26) configured as a recess **characterized in that** the chip cavity (26) is laterally delimited by the first and the third part regions (30a, 30c) of the chamfer (28), is delimited at its front end region facing the main cutting edge (22) by the second part region (30b) of the chamfer (28), and is delimited in its opposite rear region by a wall (40);
wherein the chip cavity (26) including the wall (40) is arranged mirror-symmetrically to a plane of symmetry (41) which is oriented orthogonally to the main cutting edge (22) and runs through a center point of the main cutting edge (22),
wherein the chip cavity (26) including the wall (40) is arranged below the chamfer plane (32) and does not intersect the chamfer plane (32),
wherein the wall (40) comprises five wall regions (42, 44, 46, 48, 50) which adjoin one another in incremental order and in sequence, wherein a first of the five wall regions (42) and a fifth of the five wall regions (50) are configured so as to be mirror-symmetrical to one another relative to the plane of symmetry (41), wherein a second of the five wall regions (44) and a fourth of the five wall regions (48) are configured so as to be mirror-symmetrical to one another relative to the plane of symmetry (41), and wherein a third of the five wall regions (46) is divided into two mirror-symmetrical halves by the plane of symmetry (41),
wherein a profile line (62) of the wall (40), which results from an intersection of the wall (40) with an imaginary plane (64) oriented orthogonally to the plane of symmetry (41) and running along the longitudinal direction (24), has a first part portion (52) arranged in the first wall region (42), a second part portion (54) arranged in the second wall region (44), a third part portion (56) arranged in the third wall region (46), a fourth part portion (58) arranged in the fourth wall region (48), and a fifth part portion (60) arranged in the fifth wall region (50),
wherein the first, third and fifth part portions (52, 56, 60) are each concave, and wherein the second and fourth part portions (54, 58) are rectilinear or convex, and
wherein at least one point on the first part portion (52) has a smaller distance from the main cutting edge (22) than all points on the second, third and fourth part portions (54, 56, 58), and wherein all points on the second and fourth part portions (54, 58) have a smaller distance from the main cutting edge (22) than all points on the third part portion (56).

2. The cutting insert as claimed in claim 1, wherein all points on the first part portion (52) have a smaller distance from the main cutting edge (22) than all points on the second, third and fourth part portions (54, 56, 58).

3. The cutting insert as claimed in claim 1 or 2, wherein the five part portions (52, 54, 56, 58, 60) each define a curve which is continuous and differentiable.

4. The cutting insert as claimed in any of claims 1 - 3, wherein the five wall portions (42, 44, 46, 48, 50) do not merge into one another tangentially.

5. The cutting insert as claimed in any of claims 1 - 4, wherein the first part portion (52) is curved more strongly than the third part portion (56).

6. The cutting insert as claimed in any of claims 1 - 5, wherein the third part portion (56) is the longest in comparison with the other part portions (52, 54, 58, 60) of the profile line (62).

7. The cutting insert as claimed in any of claims 1 - 6, wherein the second part region (30b) of the chamfer (28) directly adjoins the main cutting edge (22).

8. The cutting insert as claimed in any of claims 1 - 7, wherein the first part portion (52) of the profile line (62) directly adjoins the first part region (30a) of the chamfer (28), and wherein the fifth part portion (60) of the profile line (62) directly adjoins the third part region (30c) of the chamfer (28).

9. The cutting insert as claimed in any of claims 1 - 8, wherein a first boundary line (72) between the chip cavity (26) and the first part region (30a) of the chamfer (28), viewed in top view, runs at a first angle α relative to the main cutting edge (22), wherein 30° ≤ α ≤ 90°.

10. The cutting insert as claimed in any of claims 1 - 9, wherein a plurality of protrusions (68) are arranged in the chip cavity (26) and protrude upward from a base surface (70) arranged in the chip cavity (26), and wherein the protrusions (68) are arranged parallel to one another in a row along the main cutting edge (22).

11. The cutting insert as claimed in claim 10, wherein the number of protrusions (68) is uneven.

12. The cutting insert as claimed in claim 10 or 11, wherein the protrusions (68) directly adjoin the second part region (30b) of the chamfer (28).

13. The cutting insert as claimed in any of claims 10 - 12, wherein the protrusions (68) each have a surface portion which lies in the chamfer plane (32).

14. The cutting insert as claimed in any of claims 1 - 13, wherein the chip cavity (26) is configured so as to be concave in any section parallel to the plane of symmetry (41).

15. A tool (16) for machining a workpiece, with a cutting insert (10) as claimed in any of claims 1-14 and a tool holder (18) which comprises at least one cutting insert receptacle (20) for receiving the cutting insert (10).

## Revendications

1. Plaquette de coupe (10) pour un outil (16) d'usinage par enlèvement de copeaux, la plaquette de coupe (10) présentant dans une zone de coupe (12) les éléments suivants :
- une arête de coupe principale (22) qui est configurée sous forme rectiligne et s'étend orthogonalement à une direction longitudinale (24) de la zone de coupe (12) ;
- un chanfrein (28) divisé en trois zones partielles (30a, 30b, 30c) qui sont toutes agencées dans un plan de chanfrein commun (32), une première des trois zones partielles (30a) étant agencée de manière adjacente à une première extrémité (34a) de l'arête de coupe principale (22), une deuxième des trois zones partielles (30b) s'étendant le long d'au moins une grande partie de l'arête de coupe principale (22) et parallèlement à celle-ci, et une troisième des trois zones partielles (30c) étant agencée de manière adjacente à une deuxième extrémité (34b) de l'arête de coupe principale (22) ; et
- une cuvette à copeaux (26) qui est configurée sous forme de creux, **caractérisée en ce que** la cuvette à copeaux (26) est délimitée latéralement par la première et la troisième zone partielle (30a, 30c) du chanfrein (28), est délimitée (28) dans sa zone d'extrémité avant, orientée vers l'arête de coupe principale (22), par la deuxième zone partielle (30b) du chanfrein et est délimitée dans sa zone arrière opposée par une paroi (40) ;
la cuvette à copeaux (26), y compris la paroi (40), étant symétrique par rapport à un plan de symétrie (41) qui est dirigé orthogonalement à l'arête de coupe principale (22) et passe par un centre de l'arête de coupe principale (22), la cuvette à copeaux (26), y compris la paroi (40), étant agencée au-dessous du plan de chanfrein (32) et ne le coupant pas,
la paroi (40) présentant cinq zones de paroi (42, 44, 46, 48, 50) qui sont adjacentes les unes aux autres dans l'ordre croissant de la série, une première des cinq zones de paroi (42) et une cinquième des cinq zones de paroi (50) étant configurées en miroir l'une par rapport à l'autre par rapport au plan de symétrie (41), une deuxième des cinq zones de paroi (44) et une quatrième des cinq zones de paroi (48) étant configurées en miroir l'une par rapport à l'autre par rapport au plan de symétrie (41), et une troisième des cinq zones de paroi (46) étant divisée en deux moitiés en miroir par le plan de symétrie (41),
une ligne de profil (62) de la paroi (40), qui résulte d'une intersection de la paroi (40) avec un plan imaginaire (64) qui est dirigé orthogonalement au plan de symétrie (41) et s'étend le long de la direction longitudinale (24), présentant une première section partielle (52) agencée dans la première zone de paroi (42), une deuxième section partielle (54) agencée dans la deuxième zone de paroi (44), une troisième section partielle (56) agencée dans la troisième zone de paroi (46), une quatrième section partielle (58) agencée dans la quatrième zone de paroi (48) et une cinquième section partielle (60) agencée dans la cinquième zone de paroi (50),
la première, la troisième et la cinquième section partielle (52, 56, 60) étant chacune configurées sous forme concave, et la deuxième et la quatrième section partielle (54, 58) étant chacune configurées sous forme rectiligne ou convexe, et au moins un point sur la première section partielle (52) étant à une distance plus petite de l'arête de coupe principale (22) que tous les points sur la deuxième, la troisième et la quatrième section partielle (54, 56, 58), et tous les points sur la deuxième et la quatrième section partielle (54, 58) étant à une distance plus petite de l'arête de coupe principale (22) que tous les points sur la troisième section partielle (56).

2. Plaquette de coupe selon la revendication 1, dans laquelle tous les points sur la première section partielle (52) sont à une distance plus petite de l'arête de coupe principale (22) que tous les points sur la deuxième, la troisième et la quatrième section partielle (54, 56, 58).

3. Plaquette de coupe selon la revendication 1 ou 2, dans laquelle les cinq sections partielles (52, 54, 56, 58, 60) définissent chacune une courbe qui est continue et différentiable.

4. Plaquette de coupe selon l'une quelconque des revendications 1 à 3, dans laquelle les cinq zones de paroi (42, 44, 46, 48, 50) ne se rejoignent pas tangentiellement.

5. Plaquette de coupe selon l'une quelconque des revendications 1 à 4, dans laquelle la première section partielle (52) est plus incurvée que la troisième section partielle (56).

6. Plaquette de coupe selon l'une quelconque des revendications 1 à 5, dans laquelle la troisième section partielle (56) est la plus longue en comparaison des autres sections partielles (52, 54, 58, 60) de la ligne de profil (62).

7. Plaquette de coupe selon l'une quelconque des revendications 1 à 6, dans laquelle la deuxième zone partielle (30b) du chanfrein (28) est directement adjacente à l'arête de coupe principale (22).

8. Plaquette de coupe selon l'une quelconque des revendications 1 à 7, dans laquelle la première section partielle (52) de la ligne de profil (62) est directement adjacente à la première zone partielle (30a) du chanfrein (28), et dans laquelle la cinquième section partielle (60) de la ligne de profil (62) est directement adjacente à la troisième zone partielle (30c) du chanfrein (28).

9. Plaquette de coupe selon l'une quelconque des revendications 1 à 8, dans laquelle une première ligne de démarcation (72) entre la cuvette à copeaux (26) et la première zone partielle (30a) du chanfrein (28), vue dans une vue de dessus, s'étend selon un premier angle α par rapport à l'arête de coupe principale (22), avec : 30° ≤ α ≤ 90°.

10. Plaquette de coupe selon l'une quelconque des revendications 1 à 9, dans laquelle plusieurs reliefs (68) sont agencés dans la cuvette à copeaux (26), qui font saillie vers le haut à partir d'une surface de fond (70) agencée dans la cuvette à copeaux (26), et dans laquelle les reliefs (68) sont agencés parallèlement les uns aux autres en une rangée le long de l'arête de coupe principale (22).

11. Plaquette de coupe selon la revendication 10, dans laquelle le nombre de reliefs (68) est impair.

12. Plaquette de coupe selon la revendication 10 ou 11, dans laquelle les reliefs (68) sont directement adjacents à la deuxième zone partielle (30b) du chanfrein (28).

13. Plaquette de coupe selon l'une quelconque des revendications 10 à 12, dans laquelle les reliefs (68) présentent chacun une section de surface située dans le plan de chanfrein (32).

14. Plaquette de coupe selon l'une quelconque des revendications 1 à 13, dans laquelle la cuvette à copeaux (26) est configurée sous forme concave dans chaque coupe parallèle au plan de symétrie (41).

15. Outil (16) pour l'usinage d'une pièce par enlèvement de copeaux, avec une plaquette de coupe (10) selon l'une quelconque des revendications 1 à 14 et un porte-outil (18) qui présente au moins un logement de plaquette de coupe (20) pour recevoir la plaquette de coupe (10).
